# EUROPÄISCHE PATENTANMELDUNG

(11) **EP 2 756 877 A1**
(43) Veröffentlichungstag der Anmeldung: **23.07.2014**
(21) Anmeldenummer: 14151365.5
(22) Anmeldetag: 16.01.2014
(51) Int. Cl.: B01D 53/50, B01D 53/86, C10L 3/10, H01M 8/06

(54) **Verfahren zur reaktiven Entschwefelung von Erdgas in Brennstoffzellenheizgeräten**

(30) Priorität: 17.01.2013 DE 102013000718; 28.03.2013 DE 102013005464
(71) Anmelder: Vaillant GmbH, 42859 Remscheid (DE)
(72) Erfinder: Badenhop, Thomas, 51688 Wipperfürth (DE)
(74) Vertreter: Popp, Carsten

(57) **Zusammenfassung**

Es wird vorgeschlagen, dass in mit Brenngas betriebenen Brennstoffzellen-Heizgeräten die Schwefelbegleiter in einem Oxidationskatalysator (8) unter Zugabe von (Luft-)Sauerstoff in Schwefeloxide umgesetzt werden, welche dann adsorptiv in den Adsorbern (9) und (10) aus dem Erdgasstrom entfernt werden. Eine Gasförderungseinrichtung (14) hinter dem Oxidationskatalysator (8) gewährleistet ein gleichbleibendes Mischungsverhältnis zwischen Brenngas und Sauerstoff.

## Beschreibung

Die Erfindung betrifft eine Entschwefelungseinrichtung für Brennstoffzellen-Heizgeräte.

Schwefelverbindungen stellen für nahezu alle Brennstoffzellensysteme ein Problem dar, die als Kraft-Wärme-Koppelungsanlage in der Hausenergieversorgung eingesetzt werden sollen und Erdgas oder Heizöl EL als Brennstoff verwenden. Nahezu alle kohlenwasserstoffhaltigen Energieträger enthalten in geringen Mengen Schwefel (S). Schwefel bildet mit fast allen Metallen Sulfide aus, welche die aktiven Zentren von Katalysatoren blockieren können. Dieses Phänomen wird besonders bei platinhaltigen Edelmetallkatalysatoren, aber auch den Metallen Nickel, Cerium, Gadolinium und Yttrium beobachtet. Die Elemente der seltenen Erden, Übergangsmetalle und die Platingruppenelemente sind beliebte Metalle für die Bildung von Elektrokatalysatoren in Brennstoffzellen. Diese Elektrokatalysatoren werden durch Schwefelverbindungen im Brenngas oder der Kathodenluft nachhaltig, meistens irreversibel durch die eintretende Sulfidbildung geschädigt. Aufgabe der Entschwefelung in Brennstoffzellensystemen ist es, die Schwefelverbindungen aus den schwefelhaltigen Brennstoff zu entfernen, um so nachgelagerte katalytische Reaktionsstufen, wie z.B. Reformer oder Brennstoffzelle vor einer Schwefelvergiftung zu schützen.

Nach dem Stand der Technik kommen für die Entfernung der schwefelhaltigen Begleitstoffe bei Brennstoffzellensystemen in der Hausenergieversorgung zwei Verfahren in Betracht:
1. "kalte" Adsorption an Aktivkohle, Molekularsieben oder anderen geeigneten Adsorptionsmitteln. Damit werden Schwefelverbindungen wie zum Beispiel Tetra-Hydro-Thiophen (THT), die in Deutschland zur Odorierung des Erdgases verwendet werden, zurückgehalten. Wenn das Adsorbens mit Schwefelverbindungen vollständig beladen ist und keine weiteren Schwefelverbindungen mehr aufnehmen können, muss die Entschwefelungsstufe ausgetauscht werden. Dieses Entschwefelungsverfahren kann bis max. 70°C Betriebstemperatur eingesetzt werden. Daher wird dieses Verfahren auch "kalte" Adsorption genannt. Nachteil dieses Verfahrens ist seine begrenzte Standzeit in Brennstoffzellen-Heizgeräten. Eine etwa 5 Liter große Entschwefelungskartusche ist nach 1 bis 2 Jahren Betrieb zu wechseln.
2. Hydrierende Entschwefelung (HDS) mit nachfolgender chemischer Adsorption beispielsweise an einem ZnO-Festbett. Vorteil dieses Verfahrens sind die deutlich höher erzielbaren Standzeiten. Nachteil ist jedoch, dass dieses hydrierende Verfahren Wasserstoff benötigt, um die schwefelhaltigen Verbindungen im Erdgas zu Schwefelwasserstoff umzusetzen. Dies führt zu einen hohen apparativen Aufwand, welche sich in Brennstoffzellen-Heizgeräten wirtschaftlich nicht darstellen lässt; weshalb dieses Entschwefelungsverfahren vorwiegend in einem industriellen Umfeld, z.B. Raffinerien, Verwendung findet.

Da die Erdgasqualitäten und die Odorierungsgewohnheiten der Gasversorger regional sehr verschieden sein können und auch zeitlichen Veränderungen unterliegen, werden Entschwefelungsstufen auf dem Prinzip der "kalten" Adsorption meist gegen eine höchst anzunehmende Schwefelfracht im Erdgas sowie alle denkbaren Schwefelspezies ausgelegt. Diese Art der Dimensionierung führte bisher dazu dass sich solche Entschwefelungsverfahren in Brennstoffzellen-Heizgeräten nur schwierig wirtschaftlich darstellen lassen.

Die natürlichen Schwefelbegleiter des Erdgases sind u.a. Schwefelwasserstoff (H2S), Kohlenstoffoxidsulfid (COS), Schwefelkohlenstoff (CS2) und Mercaptane. Darüber hinaus werden dem Erdgas geruchsintensive, schwefelhaltige Odorierungsmittel zur Warnung vor Leckagen zugesetzt. In Europa werden dafür üblicherweise die Schwefelverbindungen Tetra-Hydro-Thiophen (THT), Iso-Propyl-Mercaptan, Tertiär-Butly-Mercaptan (TBM) und Ethyl-Mercaptan eingesetzt.

In Deutschland sind die auftretenden Konzentrationen der Schwefelverbindungen in den DVGW-Richtlinien G260 und G280 geregelt. Der Marktanteil von nicht schwefelhaltigen Odorierungsmitteln lag in Deutschland unter 25% im Jahr 2010. Mittelfristig wird es daher erforderlich sein, natürliche Schwefelbegleiter, wie auch schwefelhaltige Odorierungsmittel aus dem Erdgas zu entfernen, um einen wirtschaftlichen Betrieb von Brennstoffzellen-Heizgeräten darstellen zu können.

In Brennstoffzellensystemen, die für die Hausenergieversorgung entwickelt werden, wird ein kohlenwasserstoffhaltiger Brennstoff in einem Reformer in ein wasserstoffreiches Gas (Reformatgas) überführt. Als Reformierungsverfahren sind für die Hausenergieversorgung Dampfreformierung, Autotherme Dampfreformierung ATR und partielle Oxidation POX (thermisch oder katalytisch) vorgeschlagen worden.

Die natürlichen als auch die schwefelhaltigen Odorierungsmittel werden in den vorgenannten Reformierungsverfahren zu Schwefelwasserstoff umgesetzt. Der so gebildete Schwefelwasserstoff bildet mit fast allen Metallen Sulfide aus und führt zu einer nachhaltigen Schädigung der eingesetzten metallischen Katalysatoren in Brennstoffzellensystemen.

Aus der Patentanmeldung EP 2 484 428 A2 ist ein Verfahren zur selektiven Entschwefelung von sauerstoffhaltigen Gasen bekannt, bei dem das Gas mit einem selektiven Oxidationsmittel versetzt und mit einem basischen Feststoff in Kontakt gebracht wird und auf eine Temperatur von mindestens 100 °C erhitzt wird. Dieses Verfahren ist jedoch nicht für Brenngase geeignet.

Aus den Patentanmeldungen DE 10 2007 023 668 A1, US 2004/0106837 A1 und US 2012/0015259 A1 ist es grundsätzlich bekannt, den Schwefelanteil in Brennstoffen selektiv in einem selektiven Oxidationskatalysator zu oxidieren und dann adsorptiv aus dem Gasstrom abzutrennen.

Der Oxidationskatalysator ist ein edelmetallhaltiger Katalysator, z.B. Platin oder Palladium oder eine Kombination daraus. Durch die exotherme Reaktion der Oxydation der Schwefelverbindungen und in geringen Maße des Brennstoffes führt zu einer Erwärmung des Oxidationskatalysators, der bei entsprechender Isolierung während des Betriebes keine externe Zuführung von Wärme benötigt, um auf Betriebstemperatur zu bleiben. Während des Startvorganges ist der Oxidationskatalysator auf Betriebstemperatur vorzuwärmen, z.B. mittels eines elektrischen Heizers oder einer elektrischen Vorheizung gemäß der Patentanmeldung EP 2520542 A1.

Ein Problem bei der Oxidation des Schwefelanteils in Brennstoffen besteht darin, dass parasitär auch produktive Brennstoffanteile, insbesondere Kohlenwasserstoffe wie Methan oxidiert werden können.

Der Erfindung liegt die Aufgabe zugrunde, eine Brennstoffzellenanlage bereitzustellen, die die Oxidation von produktiven Brennstoffanteilen verringert.

Erfindungsgemäß wird eine Vorrichtung vorgeschlagen, die so ausgebildet ist , dass dem zu entschwefelnden Erdgas Sauerstoff oder Luftsauerstoff zugeführt wird, wobei der Sauerstoffgehalt nach der Zumischung einen Sauerstoffgehalt von 2 bis 4 Vol.-% betragen soll. Diese Zumischung erfolgt bei Umgebungstemperaturen. Danach wird das Gemisch einem selektiv wirkenden Oxidationskatalysator zugeführt. Dieser Oxidationskatalysator arbeitet bei einer Temperatur von 200 bis 400°C. Dabei werden die Schwefelverbindungen selektiv in Schwefeloxide umgesetzt:

(a) R-S / COS / H₂S + O₂ -> SOₓ + CO₂ + H₂O mit x = 2 oder 3

Dies erfolgt durch eine die Vorrichtung gemäß den Merkmalen des unabhängigen Anspruchs. Die Merkmale der abhängigen Ansprüche beschreiben vorteilhafte Weiterbildungen.

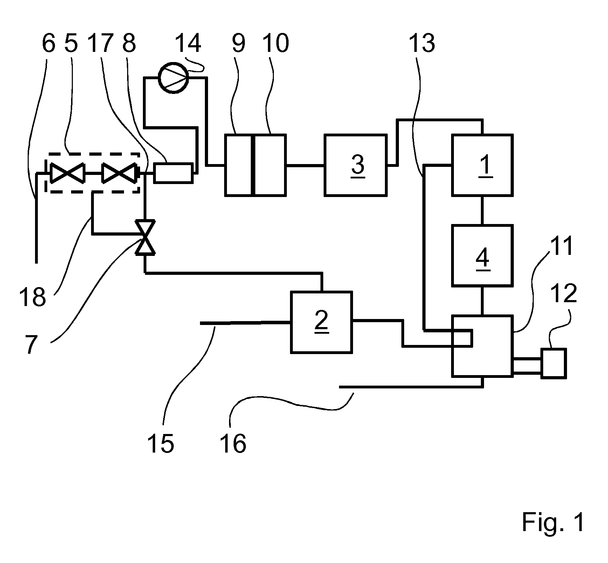

Die Erfindung wird nun anhand der Figur 1 detailliert erläutert. Figur 1 zeigt den prinzipiellen Aufbau und deren Integration in ein Brennstoffzellen-Heizgerät. Das zu entschwefelnde Erdgas 6 wird durch die Gasarmatur 5 dem Oxidationskatalysator 8 zugeführt. Zwischen der Gasarmatur 5 und dem Oxidationskatalysator 8 wird Luftsauerstoff dem Erdgas zugeführt. Über die Luftdosierungseinrichtung 7 wird die für oxydative Entschwefelung benötigte Menge Luftsauerstoff zugeführt. Die Luft für die oxydative Entschwefelung wird von dem Kathodenluftversorgungsmodul 2 bereitgestellt. In einer besonders günstigen Variante kann die Luft während des Startvorganges durch die Wärmeauskoppelungseinheit mit den Abgasen der Anodenoffgas-Nachverbrennung vorgewärmt werden. Dies ist in den Figuren nicht dargestellt.

Das Luft/Erdgasgemisch wird dem Oxidationskatalysator 8 zugeführt, wo die unter (a) beschriebenen Reaktionen ablaufen und Schwefeloxide gebildet werden. Das nun schwefeloxidhaltige Erdgas wird den Adsorbern 9 und 10 zugeführt. Im Adsorber 9 wird Schwefeltrioxid an einen basischen Festbett adsorbiert, welches aus den Elementen der ersten Hauptgruppe des Periodensystems gebildet ist, vorzugsweise Natrium oder Kalium. Der Adsorber 10 nimmt das gebildete Schwefeldioxid auf und wird aus den Elementen der ersten Hauptgruppe des Periodensystems gebildet ist, vorzugsweise Natrium oder Kalium.

Das entschwefelte Erdgas wird dann dem Reformer 3 zugeführt, wo ein wasserstoffreiches Brenngas erzeugt wird. Je nach eingesetztem Brennstoffzellentyp kann der Reformer 3 noch eine Konvertierungs- und Gasfeinreinigungsstufe enthalten (beide nicht dargestellt). Das wasserstoffreiche Brenngas wird der Brennstoffzelle 1 zugeführt, wo dieses zusammen mit der vorgewärmten Kathodenluft 13 elektrochemisch umgesetzt wird. Das Anodenoffgas und die Kathodenabluft werden der Nachverbrennungsstufe 4 zugeleitet, wo alle brennbaren Anteile totaloxidiert werden. In der Wärmeauskoppelungseinheit 11 wird zunächst die Kathodenluft vorgewärmt und im Abgas enthaltene Restwärme auf den Heizkreis 12 übertragen.

Der Oxidationskatalysator ist stromaufwärts von der Gasföderungseinrichtung 14 angeordnet und der Erdgasdruck hinter der Gasarmatur 5 wird auf Umgebungsdruck eingeregelt. Dies kann durch die Integration eines Nulldruckreglers in die Gasarmatur 5 erfolgen (nicht in Figur 1 dargestellt). In diesem Fall würde sich ein sehr geringer Unterdruck vor dem Oxidationskatalysator 8 einstellen, so dass die Luftdosierungseinrichtung 7 als Blende ausgebildet sein kann, weil der Luftsauerstoff bzw. Sauerstoffbedarf für den Betrieb des Oxidationskatalysator 8 proportional dem Erdgasvolumenstrom ist. In vorteilhafter Weise kann die Blende der Luftdosierungseinrichtung 7 bei der Installation so ausgewählt werden, dass der Sauerstoffgehalt an den maximal zu erwartenden Schwefelanteil angepasst wird.

Alternativ können die Luftdosierungseinrichtung 7 und Gasarmatur 5 von einem gemeinsamen Antrieb angesteuert werden. Erfindungsgemäß ist unter einem gemeinsamen Antrieb zu verstehen, dass die die Luftdosierungseinrichtung 7 und Gasarmatur 5 jeweils mit stellen Mitteln betätigt werden, die auf einer gemeinsamen Welle angeordnet sind. Es sind erfindungsgemäß jedoch auch separate Antriebe als gemeinsamer Antrieb anzusehen, wenn diese auch anders mechanisch oder elektrisch koordiniert sind.

### Bezugszeichenliste

- 1: Brennstoffzelle
- 2: Kathodenluftversorgungsmodul
- 3: Reformer
- 4: Anodenoffgas - Nachverbrennung
- 5: Gasarmatur
- 6: Erdgaszuführung
- 7: Dosierungseinrichtung Luftzuführung selektiver Oxidationskatalysator
- 8: Selektiver Oxidationskatalysator
- 9: Erster Adsorber
- 10: Zweiter Adsorber
- 11: Wärmeauskoppelungseinheit
- 12: Heizkreis oder Pufferspeicher
- 13: Vorgewärmte Kathodenluft
- 14: Gasförderungseinrichtung
- 15: Luftzufuhr
- 16: Abgas
- 17: Luftzumischeinrichtung
- 18: Gemeinsamer Antrieb

## Patentansprüche

1. Mit Brenngas, vorzugsweise mit Erdgas betreibbares Brennstoffzellen-Heizgerät mit einer Vorrichtung zur reaktiven Entschwefelung von Brenngas, wobei die Vorrichtung zur reaktiven Entschwefelung einen Oxidationskatalysator (8) zur Umsetzen der Schwefelbegleiter unter Zugabe von in einer Luftmischeinrichtung (17) zugeführtem Luftsauerstoff oder Sauerstoff in Schwefeloxide und in Strömungsrichtung des Brenngases daran anschließende zumindest einen Adsorber (9), (10) zum adsorptiven Entfernen der Schwefeloxide aus dem Brenngas umfasst, **dadurch gekennzeichnet, dass** zwischen Oxidationskatalysator (8) und Adsorber (9,10) eine Gasföderungseinrichtung (14) vorgesehen ist.

2. Brennstoffzellen-Heizgerät nach Anspruch 1, wobei das Brenngas mittels einer Gasarmatur (5) zugeführt wird, und wobei die Luftzumischeinrichtung (17) in Strömungsrichtung des Brenngases hinter der Gasarmatur (5) angeordnet ist und mit einer Dosierungseinrichtung (7) zur Luftzuführung zum selektivem Oxidationskatalysator (8) verbunden ist.

3. Brennstoffzellen-Heizgerät nach Anspruch 2, wobei die Gasarmatur (5) so ausgebildet ist, dass der Brenngasdruck hinter der Gasarmatur (5) auf Umgebungsdruck eingeregelt wird und wobei die einer Dosierungseinrichtung (7) im Form einer Blende ausgeführt ist.

4. Brennstoffzellen-Heizgerät nach Anspruch 2, wobei die Gasarmatur (5) und die Dosierungseinrichtung (7) jeweils ein dosierbares Ventil umfassen, und wobei Mittel (18) vorgesehen sind, die die Öffnungsgrad der Ventile koordiniert.

5. Brennstoffzellen-Heizgerät nach einem der Ansprüche 2 bis 4, wobei die Gasarmatur (5) und die Dosierungseinrichtung (7) so ausgeführt sind, dass im Betrieb nach Zumischung des Luftsauerstoffs oder Sauerstoffs der Sauerstoffgehalt vor Eintritt in den Oxidationskatalysator 2 bis 4 Vol.-% beträgt.

6. Brennstoffzellen-Heizgerät nach einem der Ansprüche 2 bis 4, wobei die Gasarmatur (5) und die Dosierungseinrichtung (7) so ausgeführt sind, dass im Betrieb nach Zumischung des Luftsauerstoffs oder Sauerstoffs der Sauerstoffgehalt vor Eintritt in den Oxidationskatalysator eine Konzentration aufweist, die für die Oxidation des maximal zu erwartenden Schwefelgehalts im Brenngas benötigt wird.

7. Brennstoffzellen-Heizgerät nach einem der Ansprüche 1 bis 6, wobei die Zumischung des Luftsauerstoffs oder Sauerstoffs bei Umgebungstemperaturen erfolgt.

8. Brennstoffzellen-Heizgerät nach einem der Ansprüche 1 bis 6, wobei der Luftsauerstoff oder Sauerstoff vor der Zumischung vorgewärmt wird, bevorzugt durch von der Brennstoffzelle (1) oder von Nebenaggregaten der Brennstoffzelle (1) entstehenden Abwärme, besonders bevorzugt durch von der Anodenoffgas-Nachverbrennung (4) entstehende Abwärme.
